# DEMANDE DE BREVET EUROPEEN

(11) **EP 2 581 909 A1**
(43) Date de publication de la demande: **17.04.2013**
(21) Numéro de dépôt: 11306327.5
(22) Date de dépôt: 13.10.2011
(51) Int. Cl.: G11B 27/00, G06F 17/30

(54) **Procédé de détermination d'identificateurs de segments constituant un document audiovisuel et récepteur mettant en oeuvre le procédé**

(71) Demandeur: Thomson Licensing, 92130 Issy-les-Moulineaux (FR)
(72) Inventeur: Chevallier, Louis, 35520 La Mézière (FR); Vigouroux, Jean-Ronan, 35000 Rennes (FR); Guermoud, Hassane, 35510 Cesson Sévigné (FR)
(74) Mandataire: Schmidt-Uhlig, Thomas

(57) **Abrégé**

L'invention concerne un procédé de détermination d'identificateurs associés à des segments d'un document. Chaque segment est composé d'une suite d'éléments unitaires tels que des images ou des séquences sonores. Chaque segment du document est découpé en un nombre déterminé de parties comprenant le même nombre d'éléments unitaires. Un élément unitaire est extrait dans la partie la plus centrale de chaque segment et associé au segment en tant qu'identificateur.

L'invention concerne également le récepteur apte à mettre en oeuvre le procédé.

## Description

L'invention concerne un procédé de création d'identificateurs au sein d'un document, et un récepteur mettant en oeuvre le procédé.

De nos jours, de nombreux appareils permettent la réception, le stockage dans des mémoires telles que des disques durs et la reproduction de documents audiovisuels enregistrés. Ces appareils peuvent stocker des documents téléchargés soit d'un réseau de diffusion unidirectionnel, soit d'un réseau point à point (Internet par exemple). Parmi ces appareils, les PVR (acronyme de Personal Video Recorder) sont généralement dotés d'un Guide Electronique de Programme (EPG en abrégé) qui permet à un utilisateur d'afficher des identificateurs de documents enregistrés en mémoire, de les sélectionner et de reproduire les documents associés en introduisant une commande. Cette quantité d'information disponible nécessite l'ajout de nouvelles fonctionnalités dans les PVR permettant une navigation rapide au sein du document enregistré. L'appareil dispose d'une interface utilisateur permettant de contrôler la sélection et la reproduction des documents enregistrés.

Les documents audiovisuels mémorisés dans des DVD sont généralement segmentés en plusieurs chapitres référencés par un identificateur. Le producteur du document effectue un découpage en une pluralité de segments possédant une unité sémantique, chaque segment occupant une plage temporelle. Le document audiovisuel est associé à un tableau contenant les index de début et de fin de chaque segment. Dans un mode simple de réalisation, chaque segment est identifié par un numéro chronologique. Cependant, ce numéro apporte peu d'information à l'utilisateur. Pour permettre à l'utilisateur de mieux identifier le segment, celui-ci est associé à un identificateur qui peut être textuel, visuel, audio, ou audiovisuel. Ainsi, le segment peut être identifié par un titre, ou par une image caractéristique de ce segment, ou encore par une image associée à un morceau sonore extrait de ce segment. Les identificateurs sont créés par le producteur du document qui est le mieux à même de donner une identité aux segments. Les identificateurs et les index pointant chaque segment sont mis dans un tableau associé au document audiovisuel. L'interface utilisateur extrait les données du tableau pour présenter les identificateurs permettant à l'utilisateur de sélectionner les segments avec une meilleure précision.

Le problème se pose lorsque le document n'est pas segmenté. Dans ce cas, il existe des procédés de segmentation exécutable au niveau du récepteur. La demande de brevet référencée FR02.13977 déposée en France le 28 octobre 2002 décrit un procédé de segmentation qui exploite le document audiovisuel de l'oeuvre pour en extraire des parties ayant une unité sémantique. Le procédé décrit dans cette demande permet d'élaborer une segmentation de vidéos de sport selon plusieurs niveaux. Il existe également des procédés permettant d'extraire de manière automatique la structure arborescente d'un film ou d'une vidéo documentaire. Classiquement, la vidéo est découpée en plans en se basant sur des changements abrupts du contenu colorimétrique des images. Puis, les plans sont regroupés en scènes en se basant sur la ressemblance visuelle des contenus des plans et leur proximité temporelle. De façon particulièrement simple, les procédés de segmentation affectent une image dudit segment comme identificateur de ce segment, cette image est par exemple extraite au milieu du segment.

Ces procédés de segmentation et d'identification des segments qui analysent en temps réel les documents audiovisuels reçus, nécessitent d'importantes ressources et notamment une taille mémoire importante pour le stockage des images en cours de traitement. Ces ressources peuvent être proportionnelles en taille à la longueur des segments, longueur qui ne peut pas être déterminée à l'avance. Il existe donc un réel besoin d'un procédé de détermination d'identificateurs au sein d'un document audiovisuel utilisant un minimum de ressources mémoire.

Ainsi, la présente invention propose un procédé de détermination d'une pluralité d'identificateurs associés à des segments d'un document.

Plus particulièrement, l'invention concerne un procédé de détermination d'une pluralité d'identificateurs associés à des segments d'un document, chaque segment étant composé d'une suite d'éléments unitaires tels que des images ou des séquences sonores; caractérisé en ce qu'il comporte les étapes suivantes :
- traitement séquentiel des éléments unitaires de chaque segment et stockage d'éléments unitaires dans un nombre déterminé de mémoires, ce nombre déterminé étant indépendant du nombre d'éléments unitaires des segments du document,
- découpage de chaque segment en un nombre de parties comprenant le même nombre d'éléments unitaires, le nombre de parties étant égal au nombre de mémoires augmenté d'une unité,
- détermination d'un élément unitaire dans chaque segment, cet élément unitaire étant extrait de la mémoire associée à la partie la plus centrale du segment
- association de chaque identificateur ainsi déterminé avec le segment associé.

De cette façon, les identificateurs ainsi déterminés sont plus représentatifs du segment associé. Le nombre déterminé de mémoires étant indépendant du nombre d'éléments unitaires des segments du document, il peut être très petit et diminuer ainsi le coût de l'équipement.

Selon un premier perfectionnement, le procédé comprend une étape de stockage d'éléments unitaires dans un registre à décalage composés de mémoires, chaque mémoire étant conçue pour contenir un élément unitaire, le stockage consistant à décaler le contenu des mémoires de la première vers la dernière mémoire, la première mémoire recevant l'élément unitaire en cours de traitement. Le contenu de la dernière mémoire du registre contient l'identificateur du segment lors de la détection du dernier élément unitaire de ce segment. Le nombre de parties est égal au nombre de mémoires du registre augmenté d'une unité. L'étape de stockage intervient lorsque l'indice de l'élément unitaire dans la dernière mémoire est inférieur ou égal au résultat de la division entière de l'indice de l'élément unitaire en cours de traitement par le nombre de parties, multiplié par le résultat de la division entière du nombre de parties par 2. De cette façon, en utilisant seulement un registre à décalage avec quelques mémoires, il est possible de déterminer des identificateurs des segments du document.

Selon un autre perfectionnement, le nombre de mémoires du registre à décalage est pair. De cette façon, le nombre de parties du document est impair et une seule partie se trouve au milieu des segments. Selon un autre perfectionnement, chaque élément unitaire est associé à une valeur d'intérêt, l'étape de stockage n'intervient pas lorsque la valeur d'intérêt de l'élément unitaire en cours de traitement est inférieure à la valeur d'intérêt de l'élément unitaire stocké dans la dernière mémoire du registre à décalage. De cette façon, si l'identificateur que l'on doit mémoriser offre un intérêt moindre de celui qui est déjà mémorisé, le décalage n'est pas effectué et l'identificateur reste le même. Selon un perfectionnement du dernier perfectionnement, si une étape de stockage n'intervient pas du fait de la valeur d'intérêt de l'élément unitaire en cours de traitement, alors l'étape de stockage correspond à la prochaine occurrence est effectuée quel que soit la valeur d'intérêt de l'élément unitaire en cours de traitement lors de cette prochaine occurrence. De cette façon, les mémoires ne sont affectées qu'une seule fois consécutivement, et la trame identificatrice stockée dans la dernière mémoire se trouve relativement proche d'une partie centrale du segment.

Selon un perfectionnement, le document est un document audiovisuel, les éléments unitaires étant des trames dudit document. Selon un perfectionnement, une séquence sonore associée à la trame identificatrice est aussi mémorisée dans chacune des mémoires, l'identificateur est constitué de la trame et de la séquence sonore mémorisée. De cette façon, l'identification des segments est améliorée.

Selon un autre perfectionnement, une pluralité d'identificateurs sont reproduits, et la sélection d'un identificateur déclenche la reproduction du segment associé à cet identificateur. De cette façon, les identificateurs permettent la sélection et la reproduction des segments du document.

L'invention a également pour objet un récepteur audiovisuel comprenant une unité centrale, un moyen de stockage, et un moyen de découpage dudit document en une pluralité de segments, chaque segment étant composé d'une suite d'éléments unitaires, tels que des images ou des séquences sonores; caractérisé en ce que le moyen de découpage traite séquentiellement les éléments unitaires de chaque segment pour découper chaque segment en un nombre déterminé de parties comprenant le même nombre d'éléments unitaires, ledit moyen de stockage permet le stockage d'éléments unitaires dans un nombre déterminé de mémoires, ce nombre déterminé étant indépendant du nombre d'éléments unitaires des segments du document, le récepteur comportant en outre un moyen de détermination d'un élément unitaire dans chaque segment, cet élément unitaire étant extrait dans la partie la plus centrale du segment et associé au segment en tant qu'identificateur.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 est un diagramme bloc d'un récepteur audiovisuel pour la mise en oeuvre de l'invention,
- la figure 2 est un organigramme des principales étapes effectuées par le procédé d'extraction selon un exemple préféré de réalisation,
- la figure 3 est un tableau montrant les premières valeurs d'indices de trames identificatrices calculées selon un exemple de réalisation de l'invention,
- la figure 4 est une illustration du découpage d'un document enregistré et du moment du décalage du contenu des mémoires dans le registre,
- la figure 5 est une apparence d'écran montrant un menu de navigation utilisant des identificateurs extraits selon le procédé,
- la figure 6 est un organigramme illustrant un perfectionnement de la présente invention visant à prendre en compte une valeur d'intérêt des images.

La présente invention peut être mise en oeuvre par tout appareil capable de traiter des documents et de les segmenter. Ces documents pouvant être sonores, ou visuels ou audiovisuels. La description qui va suivre ne constituant qu'un exemple de réalisation.

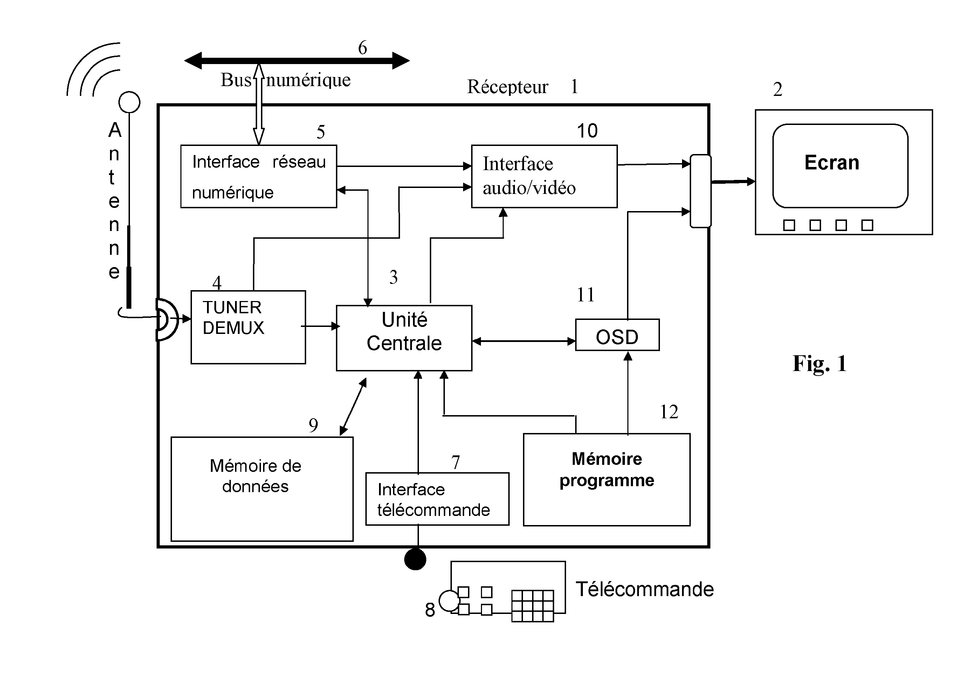

La figure 1 décrit un récepteur audiovisuel 1 muni d'un dispositif d'affichage 2 susceptible de mettre en oeuvre l'invention selon un exemple de réalisation. Le récepteur comprend une unité centrale 3 reliée à une mémoire de programme 12, et une interface 5 pour la communication avec un bus numérique local à haut débit 6 permettant de transmettre des données audio/vidéo en temps réel, par exemple Internet. La mémoire 12 peut être de type ROM, Eprom, flash ou un disque dur, ou une combinaison de ces éléments. Le récepteur peut également recevoir des données audio/vidéo d'un réseau de diffusion à travers une antenne de réception associée à un démodulateur 4. Le récepteur comprend en outre un récepteur de signaux infrarouges 7 pour recevoir les signaux d'une télécommande 8. L'unité centrale 3 est reliée à une mémoire 9 pour le stockage des données. Cette mémoire représentée sous la forme d'une seule unité dans la figure 1 peut être constituée de plusieurs composants comprend au moins une mémoire RAM et peut aussi comprendre une mémoire FLASH ou EEPROM, un disque dur ou tout autre unité de stockage de masse intégré ou connectée au récepteur 1. La mémoire RAM comporte au moins un registre à décalage comprenant au moins deux mémoires de trames, et deux tableaux TI et TA pour le stockage des trames identificatrices détectées et des adresses des segments.

Le récepteur 1 comporte une logique de décodage audio/vidéo 10 pour la génération des signaux audiovisuels envoyés à l'écran de télévision 2. La télécommande 8 est dotée des touches de direction : ↑, ↓, → et ← et des touches de fonction ou de validation telles que : « Sélection» et « OK ». Les flèches de direction permettent de déplacer un focus à l'écran, les commandes accessibles à l'utilisateur sont présentées sous forme d'icônes et sont activées lorsque l'utilisateur appuie sur « OK » avec le focus positionné sur l'icône correspondant à la commande souhaitée. En variante, le récepteur est connecté à une souris qui déplace un curseur sur l'écran permettant aussi de sélectionner des icônes. Selon une autre variante, le curseur se déplace par reconnaissance vocale, l'utilisateur introduisant les commandes à l'aide d'un microphone relié au récepteur 1.

Le récepteur 1 comprend également un circuit 11 d'affichage de données sur l'écran, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention. Le circuit OSD est contrôlé par l'Unité Centrale 3 et une application mémorisée dans la mémoire 12, par exemple une application de navigation. L'application est avantageusement réalisée sous la forme d'un module de programme enregistré dans une mémoire morte. Il peut aussi être réalisé sous la forme d'un circuit spécialisé de type ASIC par exemple. Le bus numérique 6 et/ou le réseau de diffusion transmettent au récepteur 1 des données comprenant des documents audiovisuels.

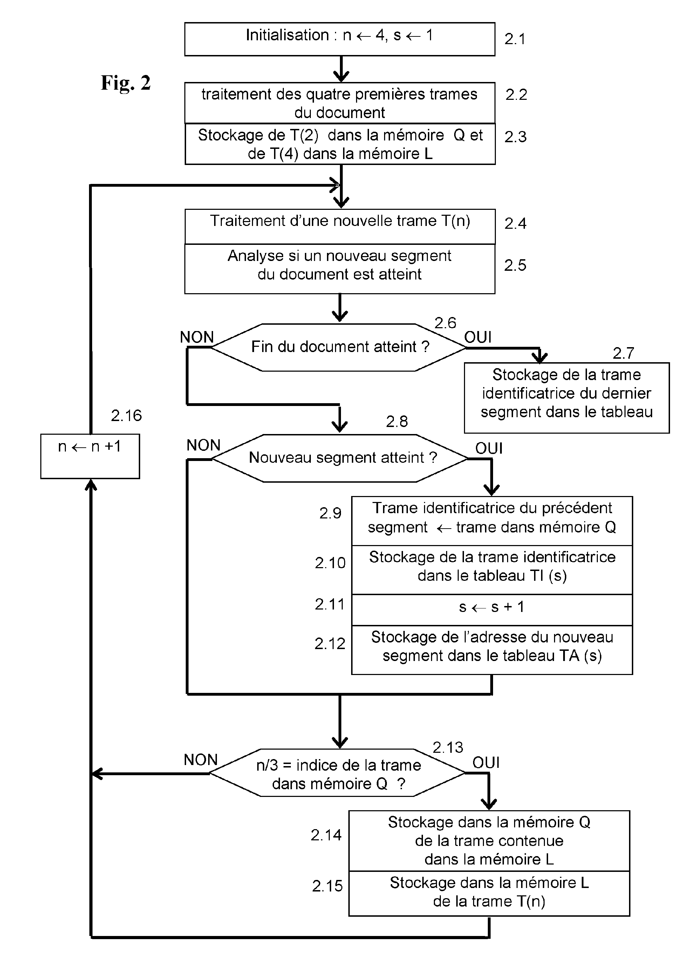

Après avoir décrit les éléments de l'invention selon un exemple préféré de réalisation, nous allons maintenant expliquer comment ceux-ci coopèrent, avec l'aide de la figure 2.

La figure 2 présente un organigramme des principales étapes effectuées par le procédé de détermination des identificateurs de segment selon un exemple de réalisation. Le procédé illustré par cet exemple prévoit l'utilisation d'un registre à décalage à deux mémoires de trames L et Q. Il peut être facilement adapté à des exemples utilisant un nombre plus important de mémoires de trames, comme nous le verrons par la suite.

Dans un premier temps, l'utilisateur sélectionne un document et commande son téléchargement. Les documents audiovisuels sont préférentiellement enregistrés dans la mémoire 9, préférentiellement dans un disque dur interne ou externe. De façon avantageuse mais non limitative, le procédé décrit par la figure 2 s'exécute en parallèle de la réception du document par le récepteur 1, chaque trame reçue étant immédiatement traitée avant l'arrivée de la trame suivante.

A l'étape 2.1, le procédé initialise les compteurs de trame n à la valeur 4 et le compteur de segment s à la valeur 1. Les quatre premières trames du document sont traitées par le récepteur 1 (étape 2.2). A l'étape 2.3, la trame T(2) est stockée dans la dernière mémoire Q du registre à décalage et la trame T(4) est stockée dans la première mémoire L du registre à décalage. La trame T(n) désigne les données numériques représentant la n^{ième} image du document, lesdites données pouvant être compressées ou non. La boucle de traitement de chaque trame commence à l'étape 2.4, par exemple lors de la réception de la trame par le récepteur 1. A l'étape 2.5, la trame reçue est analysée afin de déterminer si c'est la première trame d'un nouveau segment. La détection de nouveaux segments au sein d'un document audiovisuel s'effectue selon des techniques connues en soi. Par exemple, le document reçu possède des marques définissant les différents segments du document. Ces données descriptives permettent une décomposition fine du document et comportent du texte permettant de donner au moins un titre à chaque segment. Les données descriptives sont par exemple contenues dans les informations de service spécifiées par la norme DVB-SI.

A l'étape 2.6, le procédé teste si la fin du document est atteinte. Dans ce cas, le procédé s'interrompt et la trame identificatrice du dernier segment du document est mémorisée dans le tableau TI, cette trame identificatrice étant la trame stockée dans la mémoire Q (étape 2.7). La valeur s qui est le nombre de segments du document et les deux tableaux TI et TA sont associés au document enregistré en mémoire 9. Ces informations seront utilisées dans les applications décrites par la suite.

Si la fin du document n'est pas détectée, le procédé teste si la trame reçue est la première trame d'un nouveau segment (2.8). Dans ce cas, la trame identificatrice du segment qui vient de se terminer est la trame mémorisée dans la mémoire Q (étape 2.9). A l'étape 2.10, cette trame est mémorisée dans le tableau des trames identificatrices indexé par la valeur du compteur s. Puis, le compteur s est incrémenté afin de traiter un nouveau segment (étape 2.11). Enfin, l'adresse ou la référence temporelle du segment qui commence est stockée dans le tableau des index TI (étape 2.12. Le procédé de détermination des trames identificatrices continue à l'étape 2.13 en testant si la partie entière de la valeur du compteur n divisée par 3 est égale au numéro de la trame contenue dans la mémoire Q. Si ce n'est pas le cas, le procédé reboucle à l'étape 2.16 en mettant à jour l'index de la trame en cours de traitement, afin de faire l'acquisition d'une nouvelle trame. Sinon, la trame stockée dans la mémoire L est stockée dans la mémoire Q (étape 2.14) et la dernière trame reçue T(n) est stockée dans la mémoire L (étape 2.15). Puis, le procédé reboucle à l'étape 2.16 en incrémentant l'index n de la trame en cours de traitement, puis à l'étape 2.4 afin de faire l'acquisition d'une nouvelle trame.

A l'issue de l'étape 2.7, le document qui vient d'être segmenté et doté de trames identificatrices est associé à deux tableaux : l'un contenant les trames permettant d'identifier les « s » segments et l'autre contenant les adresses ou références temporelles permettant de pointer chaque segment dans le document enregistré.

L'ordinogramme de la figure 2 représente un exemple de réalisation de l'invention. Tout procédé capable de découper chaque segment d'un document en un nombre déterminé de parties comprenant le même nombre de trames et de sélectionner une trame dans la partie la plus centrale de chaque segment, convient dans le cadre de la présente invention.

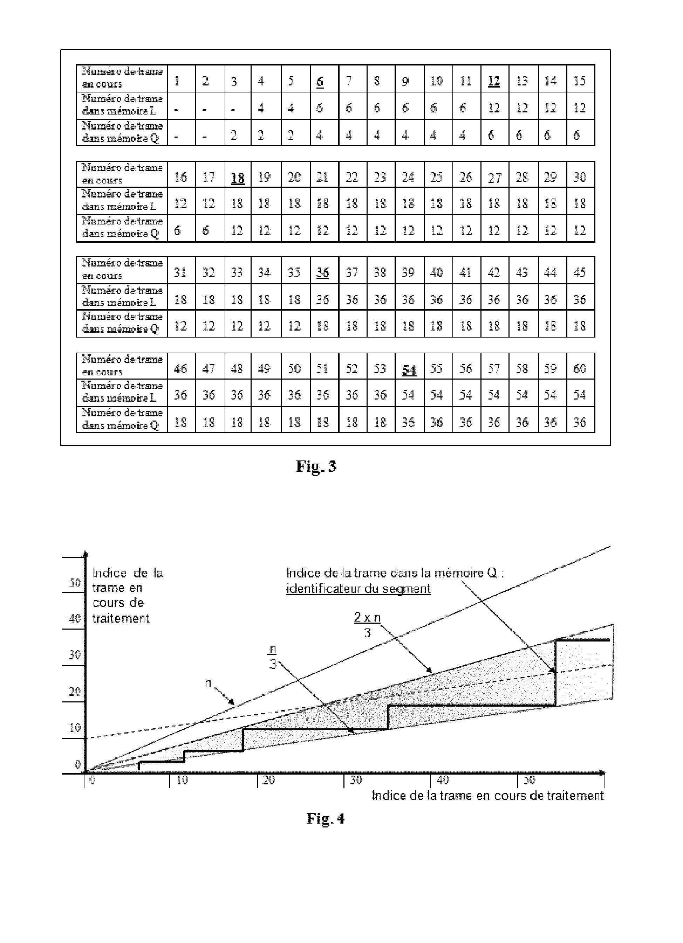

La figure 3 présente un tableau des numéros de trames stockées dans la mémoire Q et la mémoire L en fonction du numéro de trame en cours de réception d'un segment, selon un exemple de réalisation. Les numéros des trames pour lesquelles se produit un décalage des mémoires Q et L sont soulignées : 6, 12, 18, 36, 54, .... Ces valeurs sont celles pour lequel la partie entière de la valeur du compteur n divisé par 3 est égale au numéro de la trame contenue dans la mémoire Q. Ainsi, lorsque la sixième trame est reçue, la trame numéro 2 qui se trouve dans la mémoire Q est remplacée par la trame numéro 3 qui se trouve dans la mémoire L, et la mémoire L reçoit la trame en cours, c'est-à-dire la trame numéro 6. Lorsque la neuvième trame est reçue, la trame numéro 3 qui se trouve dans la mémoire Q est remplacée par la trame numéro 6 qui se trouve dans la mémoire L, et la mémoire L reçoit la trame en cours, c'est-à-dire la trame numéro 9, et ainsi de suite. Comme on peut le voir, un certain nombre de décalages des mémoires de trame L et Q s'effectue par segment, plus le segment est long, plus le nombre de décalages est important. On peut déterminer pour quel numéro de trame n, s'effectue le décalage d'indice i en utilisant la formule suivante :
- Si i est impair : le décalage d'indice i intervient à la trame numéro PES (3 ^{(i/2}), où PES est la fonction partie entière supérieure (par exemple la partie entière supérieur de 3,2 est 4),
- Si i est pair : le décalage d'indice i intervient à la trame numéro [(n (i+1) + n(i+1)]/2,

Cette formule n'est applicable que pour une méthode n'utilisant que deux mémoires de trames, elle est tout à fait généralisable à un nombre plus grand de mémoires.

La figure 4 représente un graphique montrant l'évolution de l'indice de la trame stockée dans la mémoire Q en fonction du numéro n de la trame en cours. La valeur n augmente régulièrement au fur et à mesure que les images d'un segment sont reçues. Pour certaines valeurs identifiables dans le tableau de la figure 3, les trames dans les mémoires L et Q sont décalées. Le graphique de la figure 4 montre que l'indice de la trame dans la mémoire Q se situe toujours entre la valeur n/3 et (2 x n)/3, ou n est l'indice de la trame courante. Ainsi, les images identificatrices extraites lors à la fin d'un segment se situent dans le second tiers de ce segment.

Il est possible de diminuer la distance entre la trame représentative du segment et le milieu dudit segment en augmentant le nombre de mémoires de trame. Plus généralement, supposons que l'on dispose de k mémoires de trames Mₖ, Mₖ₋₁, ... M₂, M₁ dans le registre à décalage où :
- Mₖ est la dernière mémoire du registre contenant l'image identificatrice lorsque la fin du segment est détectée,
- Mₖ reçoit la trame de Mₖ-₁ lors d'un décalage,
- M₁ est la première mémoire, elle reçoit la trame Tn en cours de lecture au sein du segment lors d'une affectation.

Lorsque la fin du segment est atteinte, l'image mémorisée dans la mémoire Mₖ et qui devient la trame identificatrice du segment se trouve dans une partie située vers le centre du segment. Si le nombre k est pair, le nombre k+1 de parties de segment est alors impair et la trame identificatrice du segment se trouve dans le segment au milieu, c'est la partie numérotée (k/2) + 1. Si le nombre k est impair, le nombre k+1 de parties est alors pair et la trame identificatrice du segment se trouve dans une des parties qui jouxtent le milieu du segment : la partie (PES[k/2]+1), ou la partie (PES[k/2]+2). De ce fait, il est préférable de choisir un registre à décalage ayant un nombre par de mémoires.

Le test appliqué à l'étape 2.13 est alors modifié en ce que, si l'indice de la trame dans la dernière mémoire de trame est inférieure ou égal au résultat de la division entière de l'indice de la trame en cours de lecture par le nombre de parties, multiplié par le résultat de la division entière du nombre de parties par 2, alors les mémoires de trames sont de nouveau affectées. Par exemple, pour 4 mémoires et une partition du segment en 5 parties, le test à l'étape 2.13 déclenchant une nouvelle affectation est : la valeur de : [PES[t/(k+1)] x PES[(k+1)/2] est-elle inférieur à l'indice de la trame dans la dernière mémoire de trame ?

L'initialisation de l'algorithme, illustré par les étapes 2.2 et 2.3 s'effectue à l'aide d'une suite arithmétique au cours des k² premières trames. La première mémoire de trame est initialisée avec l'image k, la seconde avec l'image 2 x k, la troisième avec l'image 3 x k, et ainsi de suite jusqu'à l'image k x k. A partir de l'image k², les trames sont traitées par les étapes 2.4 à 2.16. De cette façon la quantité de mémoire utilisée pour mémoriser les trames est indépendante de la longueur des segments du document. L'identificateur extrait est situé à proximité du milieu du segment du document, par exemple dans le tiers médian ou le cinquième médian. Le procédé est utilisable en explorant le document en une seule passe.

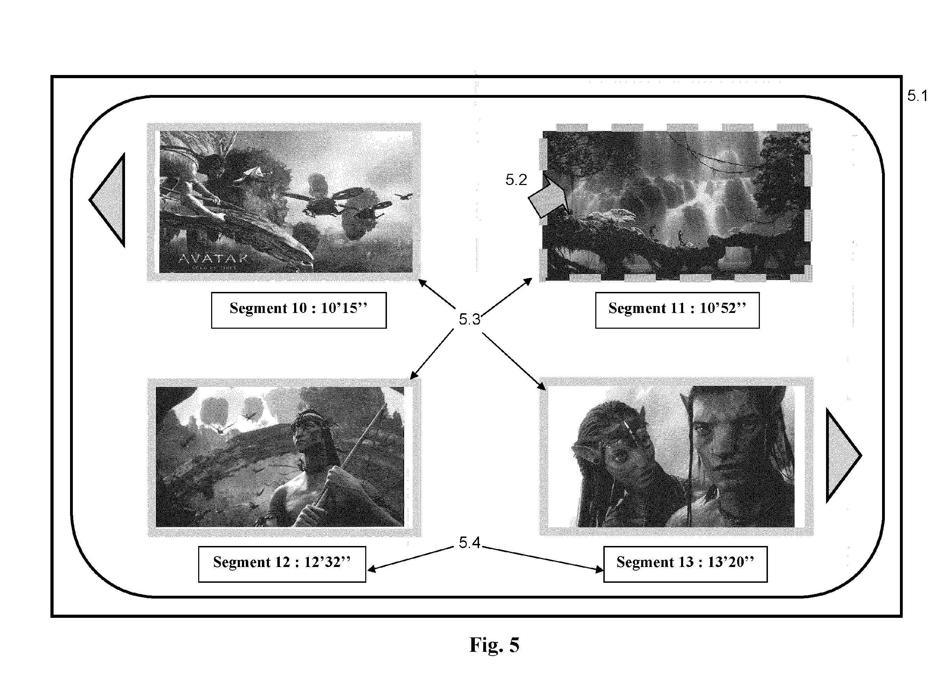

Le procédé de détermination de trames identificatrices qui vient d'être décrit par un mode de réalisation particulier, peut être utilisé par diverses applications exécutables par l'unité centrale 3 du récepteur 1 et enregistrées en mémoire 12. Une application consiste par exemple à afficher les trames identificatrices et à lancer la reproduction d'un segment en sélectionnant la trame identificatrice associée. Une telle application de navigation affiche l'exemple d'apparence d'écran illustré par la figure 5. Lors du lancement de l'application de navigation, un document a été préalablement reçu et segmenté, les trames identificatrices de chaque segment ont été déterminées et mémorisées dans un tableau selon la méthode décrite précédemment. L'utilisateur lance l'application de navigation au sein dudit document. L'application de navigation génère les signaux d'affichage du menu 5.1 qui s'affiche sur l'écran de visualisation 2.

Un curseur 5.2 permet de sélectionner les différents éléments du menu. L'utilisateur déplace le curseur 5.2 à l'aide d'un moyen de pointage tel que des touches de direction de la télécommande 8 ou une souris connectée au récepteur 1. Le menu 5.1 affiche quatre trames identificatrices 5.3 qui sont des images extraites de quatre segments consécutifs. Avantageusement, des informations 5.4 apparaissent en bas de l'image identifiant le segment, telles que : le numéro du segment au sein du document, le moment du début du segment et le moment de la fin du segment par rapport au début du document. L'utilisateur sélectionne la trame identificatrice d'un segment en positionnant le curseur 5.2 sur l'image. Pour signifier la sélection, le menu met en évidence l'image sélectionné en l'encadrant de façon particulière (voir figure 5), ou par un clignotement, ou par une surbrillance. Puis, en appuyant sur la touche « OK » l'utilisateur lance la reproduction du segment sélectionné. L'application de navigation recherche dans le tableau TI l'index du segment associé à la trame identificatrice sélectionnée et lance la reproduction à partir de ce moment. L'image du segment apparaît en plein écran. Lorsque le segment est reproduit, un sous-menu (non représenté dans la figure 5) reste apparent sur l'écran. Ce sous-menu contient au moins les quatre fonctions suivantes : arrêt sur image, saut au segment suivant, saut au segment précédent, retour au menu principal. En appuyant sur une autre touche, l'utilisateur fait disparaître le menu 5.1 ou le sous-menu, l'application de navigation est alors fermée.

Une autre application susceptible d'utiliser les trames identificatrices concerne la classification des documents. En analysant les couleurs dominantes, la présence d'objets ou la détection d'un visage particulier, il est alors possible de classer le document dans des catégories en ne traitant que les trames identificatrices et pas l'ensemble des images du document. De cette manière, le temps de traitement de classification est moins long.

Selon un perfectionnement, le test effectué à l'étape 2.13 de la figure 2 qui déclenche le décalage, prend en compte une valeur d'intérêt de l'image en cours de lecture. Le moyen permettant de découper le document en segment analyse les images reçues en temps réel et peut donner une valeur d'intérêt en exploitant par exemple les cartes de saillance. Chaque trame est donc associée à une valeur d'intérêt. Selon ce perfectionnement, lorsque l'étape 2.13 a décidé d'effectuer un décalage du contenu des mémoires de trame, un test consistant à comparer les valeurs d'intérêt de l'image en cours de lecture et de l'image dans la dernière mémoire de trame s'effectue. Si la valeur d'intérêt de l'image en cours de lecture est supérieure à celle de l'image dans la dernière mémoire de trame, alors le décalage est effectué. Si la valeur d'intérêt de l'image en cours de lecture est inférieure ou égale à celle de l'image dans la dernière mémoire de trame, et si lors de la précédente étape 2.13, le contenu des mémoires de trames n'a pas été décalé à cause de la valeur d'intérêt, un décalage est effectué. Le fait de vérifier si, lors du précédent test, un décalage a bien été effectué compte tenu de la valeur d'intérêt, permet de ne décaler les contenus des mémoires qu'une seule fois consécutivement, de cette façon la trame identificatrice stockée dans la mémoire Q ne se trouve pas trop éloignée de la partie centrale du segment. Si la valeur d'intérêt de l'image en cours de lecture est inférieure ou égale à celle de l'image dans la dernière mémoire de trame, et si lors de la précédente étape 2.13, les mémoires de trames ont été décalées, le contenu des mémoires n'est pas décalé.

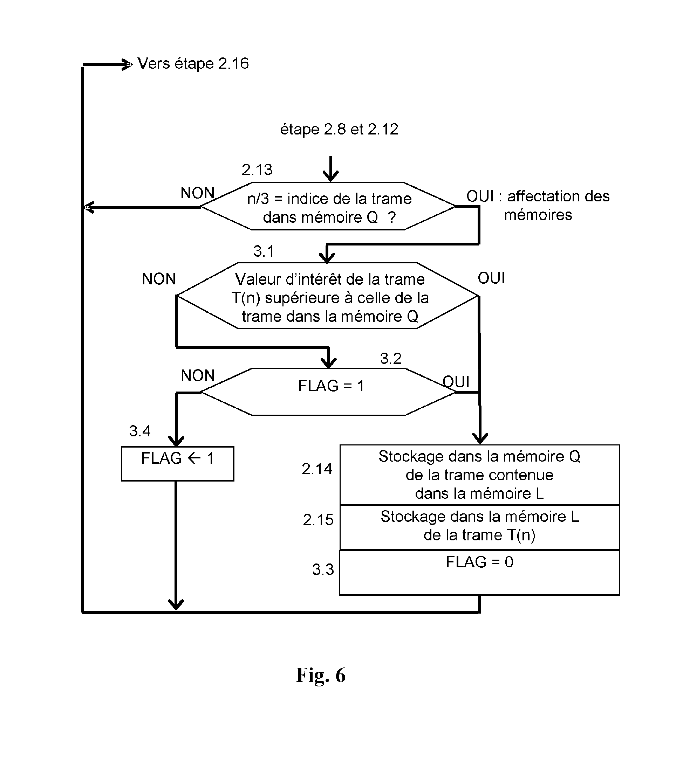

La figure 6 illustre ce perfectionnement. L'ordinogramme de la figure 2 est modifié de façon à faire apparaître un drapeau « FLAG ». Ce drapeau possède la valeur « 1 » si, lors de la dernière exécution de l'étape 2.13, la valeur d'intérêt de l'image en cours de lecture a été évaluée inférieure ou égale à celle de l'image dans la dernière mémoire de trame, et donc, le décalage du contenu des mémoires de trames ne s'est pas déroulé.

L'étape 2.13 teste si l'indice de la trame en cours entraine un décalage du contenu des mémoires. Si c'est le cas, la valeur d'intérêt de l'image en cours de lecture T(n) est comparée à celle de l'image dans la mémoire de trame Q (étape 3.1). Si la valeur d'intérêt de l'image en cours de lecture T(n) est supérieure alors les décalages définis par les étapes 2.14 et 2.15, sont effectués. Sinon, à l'étape 3.2, la valeur du drapeau FLAG est testée. Si la valeur est 1, ce qui signifie que lors de la précédente étape 2.13, il n'y a pas eu de décalage à cause de la valeur d'intérêt de l'image T(n) inférieure ou égale à celle de l'image dans la mémoire Q ; dans ce cas, le décalage est effectué. Dans les deux précédents cas, le drapeau FLAG est mis à la valeur 0 (étape 3.3). Si lors du test de l'étape 3.2, la valeur du drapeau FLAG est 0 alors, on peut s'affranchir de décaler le contenu des mémoires de trames et le drapeau est alors mis à 1 (étape 3.4). Puis, le programme reboucle à l'étape 2.16 pour mettre à jour l'index n et traiter une nouvelle trame.

Selon un autre perfectionnement, lorsque les images sont mémorisées dans les mémoires de trames (aux étapes 2.14 et 2.15), une séquence sonore est alors associée à l'image mémorisée et stockée dans le tableau TT. La création de la séquence sonore s'effectue en mémorisant constamment le contenu sonore du document audiovisuel en cours de réception dans une mémoire dont le pointeur est géré circulairement. Cette mémoire se situe préférentiellement en RAM, elle permet de mémoriser environ 30 secondes de contenu sonore. Lorsqu'aux étapes 2.14 et 2.15, les mémoires de trames sont mises à jour, alors le contenu de la mémoire gérée circulairement est mis dans une partie associée aux mémoires de trames. Lorsque la fin du segment est détectée, la trame dans la mémoire Q et la séquence sonore associée sont stockées dans le tableau TT. Ainsi, lorsqu'une application utilisant les trames identificatrices de segments, dispose d'un contenu visuel et d'un contenu sonore.

Selon une variante, la création de la séquence sonore s'effectue en prenant en compte les ruptures de son, tels que les silences. Pour cela, le pointeur adressant la mémoire qui enregistre le contenu sonore du document audiovisuel en cours de réception, est remis systématiquement au début de la mémoire lors de chaque détection de rupture de son. Tant que la séquence sonore continue, l'enregistrement du son s'effectue. Si un décalage du contenu des mémoires de trame est effectué (étape 2.14 et 2.15), alors la mémorisation de la séquence sonore associée intervient lors de la détection de la rupture de son. De cette manière, le contenu sonore est celui qui correspond au moment de l'image identifiant le segment. Cette variante évite de tronquer des phrases. Avantageusement, l'enregistrement de la séquence sonore peut se prolonger après la réception de l'image associée, mais cet enregistrement se termine de toute façon lorsque la fin du segment est détectée.

L'exemple de réalisation qui vient d'être présenté concerne la détermination de trames identificatrices au sein d'un document visuel ou audiovisuel. Le procédé s'applique aussi pour un document sonore. Dans ce cas, les éléments unitaire sont des séquences de son sans interruption, des phrase au sein d'une chanson par exemple. Le segment est déterminé par une analyse du contenu sonore, par exemple le même fond musical. Le procédé de segmentation peut faire appel à des techniques de filtrage permettant de supprimer la composante musicale d'un son pour le garder que la composante vocale. Un tel procédé s'applique pour traiter des enregistrements de concert par exemple. Chaque segment étant une chanson, l'identificateur peut être une phrase chantée au milieu de la chanson. Le procédé peut aussi s'appliquer à l'analyse d'un journal transmis par la radio, les segments sont les reportages et les éléments unitaires sont les phrases prononcées par le journalisme. Une fois enregistré et segmenté, l'utilisateur peut naviguer à l'aide des identificateurs et sélectionné le reportage qui l'intéresse.

On a décrit précédemment que des données descriptives peuvent être associées au document. Ces données peuvent aussi être associées à l'élément unitaire sélectionné comme identificateur du segment. Dans ce cas, ces données sont mises dans le tableau TI en les associant avec les trames utilisées comme identificateur. Ces données sont utilisées par les diverses application. Par exemple, l'application de navigation reproduit des données descriptives dans le menu de navigation, par exemple en les affichant près des éléments graphiques référencés 5.4

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Procédé de détermination d'une pluralité d'identificateurs associés à des segments d'un document, chaque segment étant composé d'une suite d'éléments unitaires tels que des images ou des séquences sonores; **caractérisé en ce qu'**il comporte les étapes suivantes :
- traitement séquentiel des éléments unitaires de chaque segment et stockage (2.14, 2.15) d'éléments unitaires dans un nombre déterminé de mémoires, ce nombre déterminé étant indépendant du nombre d'éléments unitaires des segments du document,
- découpage (2.8) de chaque segment en un nombre de parties comprenant le même nombre d'éléments unitaires, le nombre de parties étant égal au nombre de mémoires augmenté d'une unité,
- détermination (2.9) d'un élément unitaire dans chaque segment, cet élément unitaire étant extrait de la mémoire associée à la partie la plus centrale du segment
- association (2.10) de chaque identificateur ainsi déterminé avec le segment associé.

2. Procédé de détermination selon la revendication 1; **caractérisé en ce que** l'étape de stockage (2.14, 2.15) d'éléments unitaires s'effectue dans un registre à décalage comportant lesdites mémoires, le stockage consistant à décaler le contenu des mémoires de la première vers la dernière mémoire, la première mémoire recevant l'élément unitaire en cours de traitement, le contenu de la dernière mémoire du registre contenant l'identificateur du segment lors de la détection du dernier élément unitaire de ce segment (2.9),
l'étape de stockage intervenant lorsque l'indice de l'élément unitaire dans la dernière mémoire est inférieure ou égal au résultat de la division entière de l'indice de l'élément unitaire en cours de traitement par le nombre de parties, multiplié par le résultat de la division entière du nombre de parties par deux (2.13).

3. Procédé de détermination selon la revendication 2; **caractérisé en ce que** le nombre de mémoires du registre à décalage est pair.

4. Procédé de détermination selon la revendication 2 ou 3; **caractérisé en ce que** chaque élément unitaire est associé à une valeur d'intérêt, l'étape de stockage n'intervient pas lorsque la valeur d'intérêt de l'élément unitaire en cours de traitement est inférieure à la valeur d'intérêt de l'élément unitaire stocké dans la dernière mémoire du registre à décalage.

5. Procédé de détermination selon la revendication 4; **caractérisé en ce que** si une étape de stockage n'intervient pas du fait de la valeur d'intérêt de l'élément unitaire en cours de traitement, alors l'étape de stockage correspondant à la prochaine occurrence est effectuée quel que soit la valeur d'intérêt de l'élément unitaire en cours de traitement lors de cette prochaine occurrence.

6. Procédé de détermination selon l'une quelconque des revendications précédentes; **caractérisé en ce que** le document est un document audiovisuel, les éléments unitaires étant des trames dudit document.

7. Procédé de détermination selon la revendication 6; **caractérisé en ce qu'**une séquence sonore associée à la trame identificatrice est aussi mémorisée dans chacune des mémoires, l'identificateur étant à la fois la trame et la séquence sonore mémorisée.

8. Procédé de détermination selon l'une quelconque des revendications précédentes; **caractérisé en ce qu'**il comporte au moins une étape de reproduction d'une pluralité d'identificateurs dudit document, et au moins une étape de sélection d'un identificateur déclenchant la reproduction du segment associé à cet identificateur.

9. Récepteur audiovisuel (1) comprenant une unité centrale (3), un moyen de stockage (9), et un moyen de découpage (3,12) dudit document en une pluralité de segments, chaque segment étant composé d'une suite d'éléments unitaires, tels que des images ou des séquences sonores; **caractérisé en ce que** le moyen de découpage (3,12) traite séquentiellement les éléments unitaires de chaque segment pour découper chaque segment en un nombre déterminé de parties comprenant le même nombre d'éléments unitaires, ledit moyen de stockage (9) permet le stockage d'éléments unitaires dans un nombre déterminé de mémoires, ce nombre déterminé étant indépendant du nombre d'éléments unitaires des segments du document,
le récepteur (1) comportant en outre un moyen de détermination (3,12) d'un élément unitaire dans chaque segment, cet élément unitaire étant extrait dans la partie la plus centrale du segment et associé au segment en tant qu'identificateur.

10. Récepteur audiovisuel (1) selon la revendication 9; **caractérisé en ce que** le moyen de stockage comporte un registre à décalage dont le nombre de mémoires est égal au nombre de parties diminué d'une unité, les éléments unitaires étant successivement traités au sein du segment,
le stockage d'éléments unitaires dans le registre à décalage consistant à décaler le contenu des mémoires de la première vers la dernière mémoire, la première mémoire recevant l'élément unitaire en cours de traitement, le contenu de la dernière mémoire du registre contenant l'identificateur du segment lors de la détection du dernier élément unitaire de ce segment,
le stockage intervenant lorsque l'indice de l'élément unitaire dans la dernière mémoire est inférieure ou égal au résultat de la division entière de l'indice de l'élément unitaire en cours de traitement par le nombre de parties, multiplié par le résultat de la division entière du nombre de parties par deux.
